# EUROPEAN PATENT APPLICATION

(11) **EP 1 367 542 A2**
(43) Date of publication of application: **03.12.2003**
(21) Application number: 02019241.5
(22) Date of filing: 27.08.2002
(51) Int. Cl.: G07B 15/00

(54) **Electronic ticket, system for issuing electronic tickets, and devices for using and performing operations on electronic tickets**

(30) Priority: 28.05.2002 EP 02011857
(71) Applicant: SIEMENS AKTIENGESELLSCHAFT, 80333 München (DE)
(72) Inventor: Santa Cruz Roldan, Carmen, 9000 Denmark (DK)

(57) **Abstract**

An electronic ticket includes user information, ticket application information, and a ticket object further including a ticket data object. A modular electronic ticket includes an XLM document divided into several XML parts, the parts further including user information, and individual tickets, the individual tickets further including user information, and ticket application information including a part for a ticket object with a link specified by a keyword to a ticket data object, the ticket data object being presented by a device when the ticket is to be used.

## Description

### Field of the invention

The invention relates generally to electronic tickets or documents, and, more specifically, to generating, transferring, and presenting such tickets or documents.

### Background of the invention

Digital or electronic tickets have been under a growing interest among the general public. Therefore, various players in the industry have designed different approaches which are to enable a flexible and fast usage of tickets without any compromising of the security.

Because of the obvious advantages obtained by using a standardised methodology, the development work has lead to the establishment of several standardisation bodies. An example of such a standardisation body is the Mobile electronic Transactions MeT. The MeT concentrates on various aspects relating to electronic transactions and currently (August 14, 2002) has a website www.mobiletransaction.org.

The technology used for the administration and usage of tickets needs to be defined in order for electronic tickets to reach a commercial success. The MeT has so far published a Discussion Document MeT Ticketing Framework, Version 1.0 (21 February 2001) which at the moment may (August 14, 2002) be downloaded from http://www.mobiletransaction.org/pdf/R11/MeT-Ticketing-Framework-R11.pdf, which is hereby incorporated as reference.

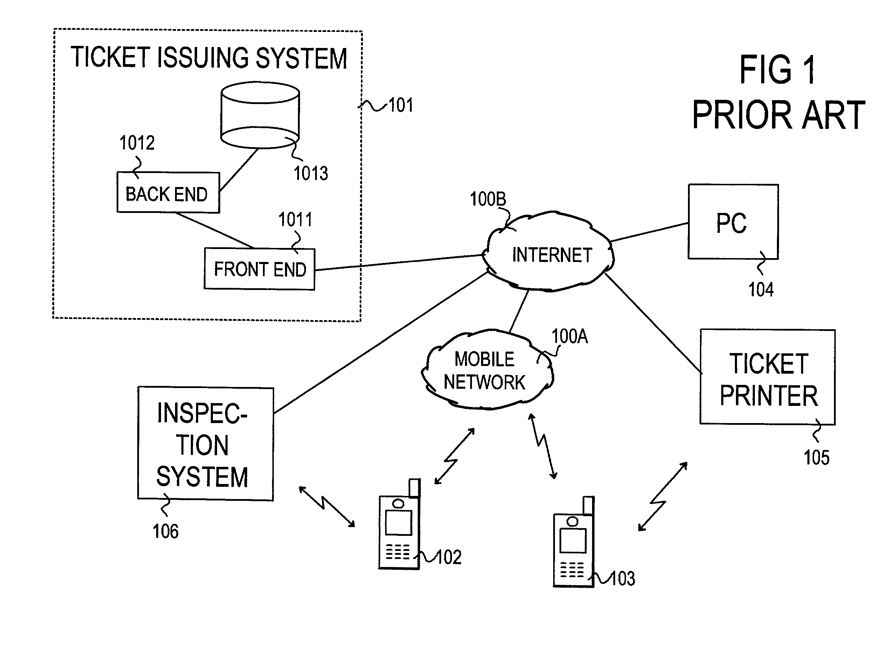

Figure 1 illustrates a system in which electronic tickets may be used. A ticket is issued by a ticket issuing system 101 which is connected to a communications network, such as the Internet 100B usually via its front end 1011. Most ticket issuing systems 101 include a back end 1012 which performs the ticketing and stores a copy of issued tickets to a data storage 1013. When a ticket has been generated in the ticket issuing system 101, it is usually sent to a personal computer 104 via the Internet 100B, or to some mobile device 102 or 103, which may be connected to the Internet 100B either directly or via a mobile network 100A.

Tickets may be ordered directly from the personal computer 104, or from the mobile devices 102, 103. Some ticket models are push-type, wherein the ticket issuing system pushes the ticket to the device of the end-user, whereas some ticket models are pull-type which involve a request from the end-user device before the ticket is generated. Further, a ticket may be ordered by a first mobile device 102 and used by the user of a second mobile device 103.

Further, usually the system contains an inspection system 106 which is intented to check the tickets. After checking the tickets a person presenting the ticket is allowed the service, such as entering an airplane or through a gate. Because electronic tickets may be used within a communications network, such as the Internet 100B, for paying also services available in the network, the nature of the inspection system is not limited to these but may involve also other tasks.

In some cases the system also includes a ticket printer 105. This kind of approach has proved particularly valuable when the service provider in question is willing to enable the use of traditional tickets as well. The conventional paper-form tickets are fast to check by a human inspector. Thus it may be beneficiary to print a paper ticket of an electronic ticket with which the user is then allowed the service. Therefore the ticket printer 105, which may also be connected to the Internet 100B, for example, may obtain instructions from the ticket issuing system 101 relating to what kinds of tickets to accept, and so forth. Ticket printer 105 may include similar functionalities to the inspection system 106.

Evidently, there is not yet any agreement about the future format of an electronic ticket. Some solutions used by current vendors and already being available in the market seem not to be satisfactory in all aspects. Thus there still exists a need for a flexible and general ticket concept which provides the ticket issuers and users of the tickets with a high enough security level, and which is technically efficient to use whatever the final form of the electronic appearance of the electronic ticket will be.

Especially the inspectioning of the electronic ticket has preferably to be fast, reliable and it should not consume too much air interface nor introduce too much disturbances into the air interface.

Firstly, the handling of modular tickets or ticket booklets in the user terminal has not been described yet in the state of the art literature. Especially tricky it is, if the handling is to be performed by one application which is a single logical entity. Secondly, the handling of documents, such as tickets, receipts, medical records, medical prescriptions, or hotel vouchers, all containing some user information content, is extremely difficult by using prior art solutions. Thirdly, the existing systems are hardly customisable thus providing the ticket vendors only a few degrees of freedom.

It is an object of the invention to bring about a solution by means of which it is possible to obtain a reliable, efficient and flexible ticketing platform. Another object is to provide a solution by means of which it is possible to use electronic tickets in a convenient way. Still another object of the invention is to bring about a novel electronic ticket model.

### Summary of the invention

This and other objectives of the invention are accomplished in accordance with the principles of the present invention as described in the patent claims.

A device for presenting an electronic ticket includes i) receiving means for receiving an electronic ticket from a ticket issuing system, the electronic ticket including user information, ticket application information, and ticket object, ii) a ticket storage for storing the ticket, iii) parsing means for detecting a predefined keyword in the ticket object thus generating a parsing result, and iv) generation means responsive to the parsing means for generating a presentation command for presenting means adapted to present a ticket data object defined by a link including the keyword, if the parsing result is that the predefined keyword is detected. With such a device the electronic tickets may be used in an easy manner, and the presenting of an electric ticket saves resources because only the ticket data object is presented.

A system for issuing electronic tickets includes i) generating means for generating an electronic ticket including user information, ticket application information, and ticket object, wherein the generating means generate a link indluding a predefined keyword into the ticket object, the link defining a ticket data object, and ii) sending means adapted to send the electronic ticket and the ticket data object to a device. With such a system automated generation and transferring of electronic tickets is achieved.

A system for using electronic tickets includes i) a system for issuing electronic tickets adapted to send electronic tickets to a device, an electronic ticket including user information, ticket application information, and ticket object, ii) a device for presenting an electronic ticket comprising 1) a ticket storage for storing at least one electronic ticket, 2) parsing means for detecting a predefined keyword in the ticket object, and 3) generation means responsive to the parsing means for generating a presentation command for presenting means if the parsing result is that the predefined keyword is detected, and iii) a device for inspecting tickets, the device having a predefined address and including 1) receiving means for receiving a ticket data object from a device, the ticket data object being defined in the device by a link including a keyword, 2) checking means for checking the contents of the object received, the means producing a checking result, and 3) entry means responsive to the checking means, adapted to allow entry, if the checking result shows that the ticket data object corresponds to a valid ticket, and/or forbid entry in the opposite case. With such a system for using electronic tickets, the benefits of electronic tickets can be utilised in an effective manner.

An electronic ticket includes i) user information, ii) ticket application information, and iii) ticket object further including a ticket data object. An electronic ticket having such a structure enables the efficient presentation of the ticket data object.

A modular electronic ticket includes an XLM document divided into several XML parts, the parts further including i) user information, and ii) individual tickets, the individual tickets further including 1) user information, and 2) ticket application information including a part for a ticket object with a link specified by a keyword to a ticket data object, the ticket data object being presented by a device when the ticket is to be used. With such a device the electronic tickets may be used in an easy manner, and the presenting of an electric ticket saves resources because only the ticket data object is presented.

Means for performing an operation on a ticket including at least one XML based document whose model derives through XLM schemas of basic user information type by extending it, several of these tickets being delivered together using the stucture provided by the modular ticket. With such means, automated operations of electronic tickets are achieved.

### Brief description of the drawings

In the following, the invention and its preferred embodiments are described more closely referring to the examples shown in Figures 2 to 11 in the appended drawings, wherein
- Figure 1: illustrates a system for providing and using electronic tickets,
- Figure 2: is a block diagram of a mobile device 102 adapted to carry out the present invention,
- Figure 3: illustrates a possible format for the ticket 300,
- Figure 4: illustrates the relation between a keyword 402 and the ticket data object 403, the keyword 402 being included in the ticket 300,
- Figure 5: is a block diagram of the ticket issuing system 103,
- Figure 6: is a block diagram of the inspection system 105 and ticket printer 106,
- Figure 7: illustrates more closely the contents of the ticket 300,
- Figure 8: illustrates the structure of a modular ticket 350 and tickets 350' and 350'',
- Figure 9A: shows a first possibility how the ticket 300A is presented to the ticket inpection system 106,
- Figure 9B: shows a second possibility of presenting the ticket 300A to the ticket inspection system 106,
- Figure 10: shows how a modular ticket 350 and a prescription 300''' may be ordered from respective ticket issuing systems 101A, 101B, and
- Figure 11: illustrates the summary of the ticket concept.

Like preference signs refer to corresponding parts and elements throughout the Figures 1-10.

### Detailed description of the invention

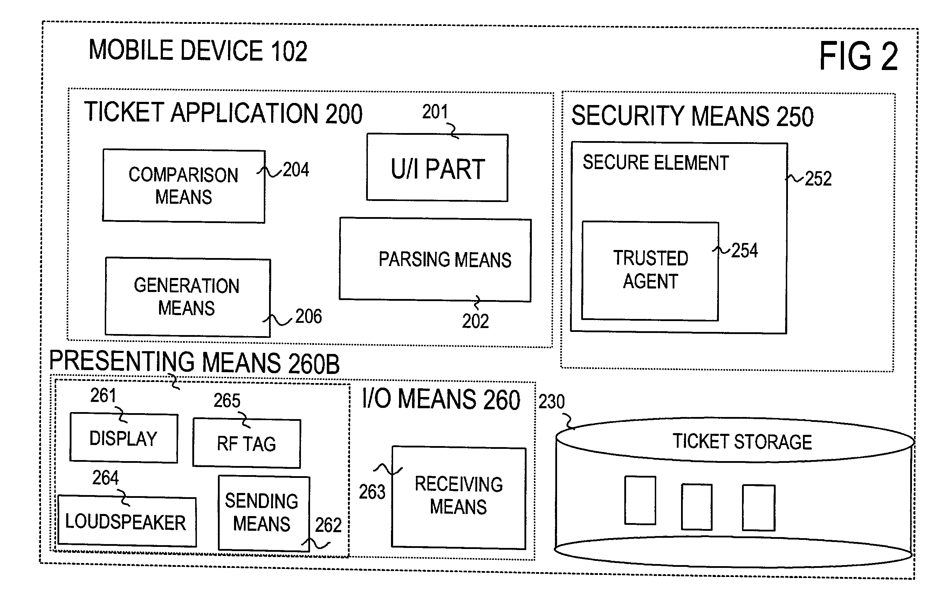

Figure 2 is a block diagram of the mobile device 102. In principle, the mobile device 102 can be any portable device, such as a Personal Digital Assistant PDA, a laptop computer, a Portable Digital Wallet, a Personal Trusted Device PTD, but in the following it is for simplicity assumed that the mobile device is a mobile phone having capabilities to be in connection via the mobile network 100A and the Internet 100B with the ticket issuing system 101.

The mobile device 102 includes input/output I/O means 260, which include receiving means 263, sending means 262 and a display 261. Further, the mobile device 102 may also include a loudspeaker 264 and a Radio Frequency RF tag 265. The RF tag is usually a contactless smartcard. On the market there are also some models known as hybrid smart cards containing both an electrical interface, preferably to the SIM card, and an RF interface.

The mobile device 102 includes also security means 250. If the mobile device 102 is a mobile phone, the security means 250 then further comprise a Secure Element SE 252, such as a Subscriber Identity Module SIM similar to the SIM card used in the Global System for Mobile communications GSM, or User Identity Module UIM such as designed for the coming Universal Mobile Telecommunication System UMTS. Other well-known secure elements include Wireless Identity Module WIM such as that used in the Wireless Application Protocol WAP standard. The WIM provides cryptographic services, such as encryption, utilising Public Key Infrastructure certificates, and handling and generation of digital signatures for different mobile based applications. Some devices such as the PTD include a cryptographic library as well.

The secure element 252 may further include a trusted agent 254 whose purpose is to interact with the ticket issuing system 101. Another purpose of the secure element 252 is to interact with the inspector 106 and the ticket printer 105 using the ticket application 200 in the mobile device 102. Even though the ticket issuing system 101, ticket printer 105 and the ticket inspecting system 106 are presented as separate entities, they may well be run by one party, and all be incorporated in one device.

In the following it is assumed that the SE is a smart card which offers among others, PKI services to the ticket application. Obviously it can also be some hardware element or even a software element.

A ticket that is received from the ticket issuing system 101 is stored into ticket storage 230 such as a database or memory including a register. The ticket storage 230 includes electronic tickets and serves them to the ticket application 200.

The User Interface U/I part 201 of the ticket application 200 performs various functions. Firstly, with the help of the U/I part 201 the user may subscribe tickets from the ticket issuing system 101. Secondly, the U/I part 201 notifies the user whenever a ticket is received. The user may then have an opportunity to confirm the ticket. Thirdly, when the user is willing to use the ticket, he/she may select the ticket to be presented from a menu in the U/I part 201.

The ticket application 200 in the mobile device 102 further comprises parsing means 202, comparison means 204, and generation means 206.

When a ticket is to be used, the parsing means 202 read the contents of the ticket. Because the ticket may contain an extensible Markup Language XML frame, the parsing means 202 are adapted to detect a predefined keyword. The point of the keyword defines a link to a ticket data object. The parsing means 202 go thus through the parseable part of the ticket and produce a parsing result.

In the comparison means 204 the parsing result is checked. If the parsing result indicates that the keyword was detected, i.e. that the position of the object or a link to the object was found, in the generation means 206 a presenting request is generated. In the opposite case no presenting request will be generated. The selection of the presenting means 260B may be constrained or indicated explicitly by the issuer; then the presentating means 260B are specified within the ticket application information, PTD information, or presentation information.

The presenting request will be passed to the presenting means 260B possibly comprising of a plurality of presenting means 260B, such as display 261, sending means 262, loudspeaker 264, and RF tag 265, depending on the ticket type. The presenting means 260B present the ticket data object. According to the presenting means 260B, the presenting of the object may take place by displaying it on the display 261, such as a barcode or an image, by playing it through a the loudspeaker 264 thus producing an aurally recognisable tone, by beaconing the object i.e. storing the object as a whole or only an ID refererring to the object into an RF tag 265, which then beacons the object when brough close enough to a checkpoint, or in some other suitable way.

One possibility for presenting the ticket data object is to present it using the sending means 262. Possibilities for the sending means 262 include normal mobile phone communication methods, i.e. sending the object via a mobile network communication channel, such as per short message SMS or a multimedia service message MMS, or in a data packet. Also other possibilities exist, such as presenting the ticket data object by using a low-power RF chip such as the BLUETOOTH, or by presenting it using infra-red such as IrDA means, and so forth. If some of the mobile network communication channels or BLUETOOTH is to be used, the presentation of the object is then preferably addressed to a predefined address in order for the recipient of the presentation, i.e. the inspection system 105 or the ticket printer 105 or 106 receives the presentation.

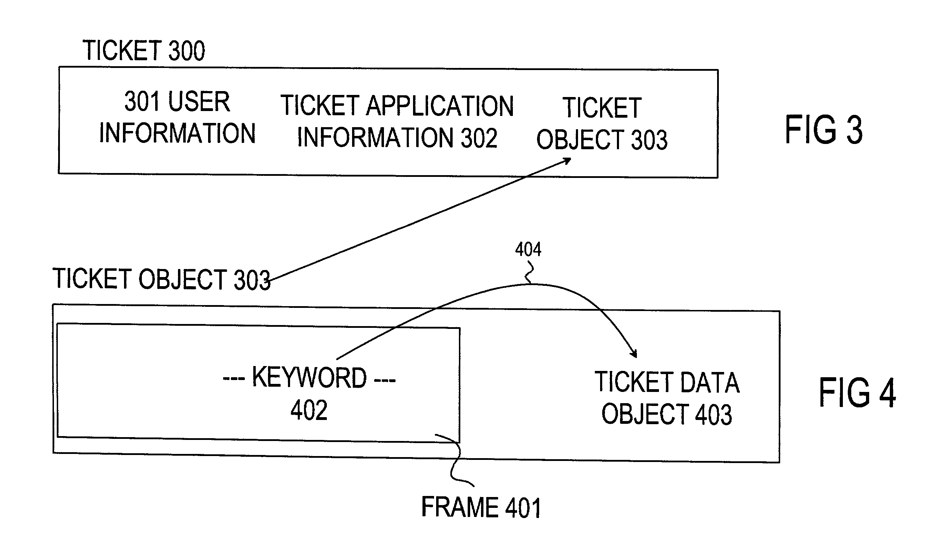

Figure 3 illustrates a possible structure of a ticket 300. The ticket includes user information 301, ticket application information 302, and ticket object 303. User information 301 is information to the user on the services, terms, and conditions of the digital ticket. Ticket application information 302 is information necessary to the ticket application 200 to manipulate a ticket data object 403, namely the ticket object 303 comprises a link to the ticket data object 403.

The extensible Markup Language XML has been proposed to be used for electronic tickets in "XML Ticket: Generalized Digital Ticket Definition Language" by Ko Fujimura, Yoshiaki Nakajima, and Jun Sekine and at the time of writing (August 14, 2002) available at *http:*//*www.w3.org*/*Dsig*/*signed-XML99*/*pp*/*NTT_xml*_*ticket. html.*

The XML is intended to define individual elements of the tickets (e.g. TicketIssuer, TicketID, Ticket typeID) that are used by the mobile devoce ticket application and the merchant's system alike. Thus, in the prior art approaches the ticket object has actually been the full XML document. Consequently, the XML document will need to be uploaded as a whole to the merchant for processing and authentication in order to obtain the service for which the ticket has been issued.

Possible XML elements and attributes to be used for electronic tickets are currently being defined. As already discussed, different services may require different schemas, such as those of ARTS for receipts, and ASTM for medical records. These efforts do not allow embedding variable content proprietary to a given issuer, because no ticket data object is involved.

Figure 4 presents the present invention more closely. The ticket object 303 contains a frame 401 which is a part of the ticket 300 including ticket application information 302, and ticket data object 403. The frame 401 includes a keyword 402 that indicates the link 404 pointing to the ticket data object 403. In other words, the ticket object 303 contains a link 404 to the ticket data object 403 which is an external entity. The ticket data object 403 grants upon presentation access to the promised service.

In accordance with the present invention, the service is not to be provided upon the presentation of the ticket 300, i.e. not presenting the XML document itself, but upon presenting a ticket data object 403. The ticket data object 403 may be of arbitrary format and content. The ticket data object 403 will be embedded in the ticket 300 through the link 404 that appears in the ticket application information 302 in the ticket 300. In this respect, the ticket data object 403 has been wrapped into the ticket 300, but it does not need to be transported together with the ticket 300. The ticket 300 is an XML document, and it has to be transported to the mobile device 102 in one go in order to enable a consistent storing into the ticket storage 230. If the ticket application 200 has no means to relate the ticket data object 403, the ticket data object 403 has also to be transported at the same time. In Figure 3 terms, the ticket object 303 includes the keyword 402 that indicates the presence of a ticket data object 403. The ticket data object 403, may be in an arbitrary format, even an XML document.

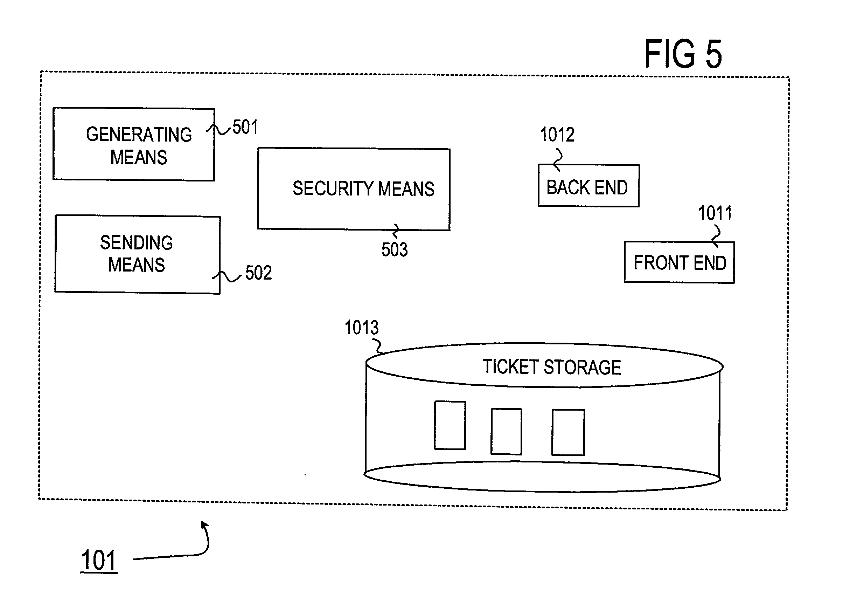

Figure 5 is a simplified block diagram of a ticket issuing system 101. The ticket issuing system includes a front end 1011, a back end 1012, security means 503, generating means 501, sending means 502, and a ticket storage 1013.

The front end 1011 takes care of user interfaces and interfaces to and from the network, such as the Internet 100B. The front end 1011 performs various tasks, such as autorisation and authentication.

The back end 1012 is the ticketing platform itself. It runs a ticket storage 1013, whereto tickets generated by the generating means 501 are stored. Further, the generated tickets may be signed in the security means 503 prior to sending the tickets to the user. The sending is done by the sending means 502. Similarly, copies of the tickets may be sent to the ticket printer 105 and to the inspection system 106.

According to one aspect of the present invention, the ticket 300 or modular ticket 350 delivered may include a promotional object with an external reference. Such a promotional object may be a ringing tone or an icon or a screen saver. The promotional object may be retrievable by the user, or it may be embedded into the ticket 300. This kind of approach is useful when offering the tickets for some customer segments, i.e. by purchasing a specific ticket one can obtain an extra logo, ringing tone, or a screen saver for free or for a reduced price.

A goal is that the modular ticket behaves as a single logical entity even though might contain several individual tickets. In the other hand, the ticket application should be able to use the operations available to manipulate the user information of the tickets to handle XML-based documents of similar user experience.

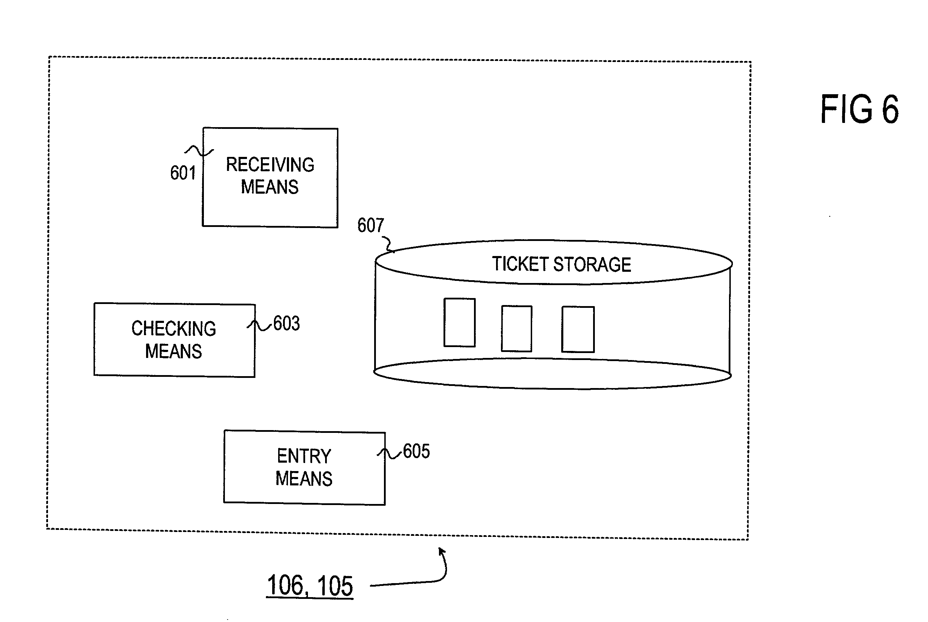

Figure 6 is a simplified block diagram of a ticket printer 105 and an inspection system 106. The ticket printer 105 and inspection system 106 contain receiving means 601, checking means 603, entry means 605, and a ticket storage 607.

Data relating to tickets generated in the ticket issuing system 101 is transferred to the ticket storage 607. Such data may include serial numbers and a generic format of an object 403G.

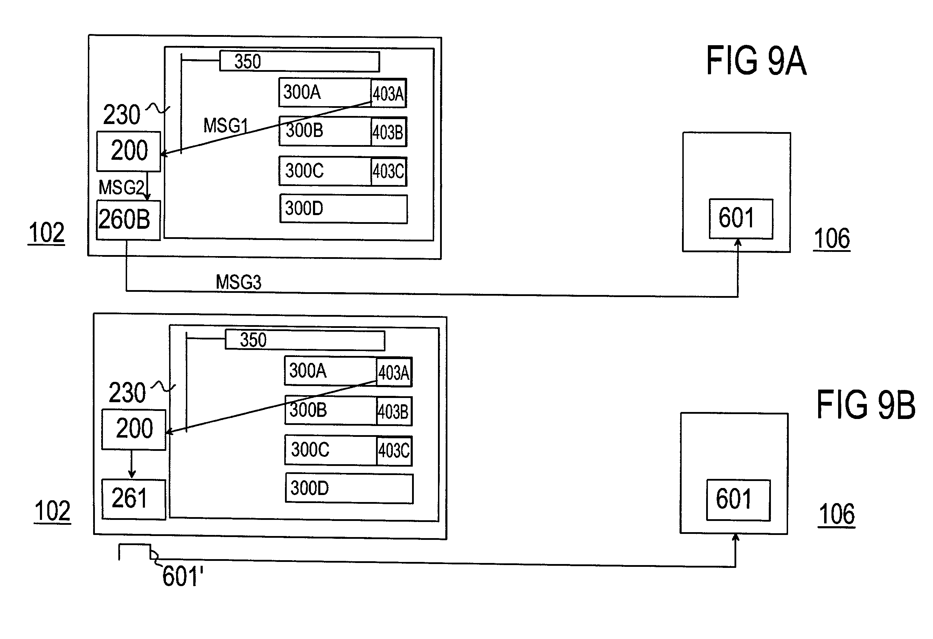

The receiving means 601 receive a ticket data object 403 from a user willing to obtain a printed ticket or to use a service. The receiving means 601 may further contain a sensor 601' as will be discussed below with reference to Figure 9B. The ticket data object 403 received from the user is then compared to the generic ticket models stored in the ticket storage 607, the comparison producing a comparison result. If the comparison result shows that the ticket is valid, the entry means 605 produce the service, allow the user to enter, print the ticket or so forth.

The serial numbers for the tickets may be combined with the generic format of the ticket data object 403G. The ticket data object 403 presented by the user may be compared with all possible combinations of the ticket data object 403G filtered through the serial numbers.

In accordance with one aspect of the present invention, the content and form of the ticket data object 403 is left totally proprietary to the merchant. The ticket data object 403 may correspond to plain text, e.g. to a proprietary alphanumeric code indicating a given ticket product. It may also be an optically or visually recognisable pattern, such as a barcode, or a picture. Further, the ticket data object 403 may include proprietary encoding e.g. in a picture in order to increase security. The encoding used for the ticket data object 403 may be ticket 300 based, i.e. the encoding in the ticket data object 403 is unique for each user. In this case, the subscriber using the ticket may be identified. The ticket data object can also be a XML document itself, but including propietary syntax to the merchant, in order to represent elements and information that are in accordance with the merchants (issuer/inspector) needs. The encoding can be made depending of user information or the ticket unique identifier.

Nonetheless, the XML ticket-information elements in the frame 401 will be used to provide a consistent experience to the user with regards to the type of ticket 300. Other usage experience issues may relate to the date of usage, and to other considerations that, on one hand, enable the ticket issuing system 101 administrators and the ticket printer 105 or inspection system 106 administrators high enough flexibility for personalising their tickets according to their needs. On the other hand, they ensure that the user feels more comfortable because the user interface remains constant even if the actual physical or electrical realisation of the ticket changes. Not only tickets, the user can operate medical records, prescriptions, coupons, receipts, and basically all electric documents in a consistent way thus reducing the threshold caused by the need to adapt new user interfaces and learn to use new services.

Some of these Consistent User Experience CUE information elements, i.e. cue ticket-info elements are under current specification in the MeT.

In accordance with one aspect of the present invention, the contents of the frame 401, i.e. the elements or format required by the ticket inspector 105, 106 processing systems are left to a high extent proprietary to the merchants and ticket issuing system 101 administrators in order to support backward compatibility, and especially, to suit particular business needs.

The ticket 300 will have three interfaces: the first to the user throughout the user information 301, then to the ticket application through the information in 302-701-703, 705,707, and the last one to the ticket issuing system 101 or inspector 105, 106 throughout the ticket data object 403 which is an external ticket entity and contains the real ticket value. This ticket data object 403 is used by the ticket inspector 105 or ticket printer 106 to validate the ticket and judge about the granting of access to services.

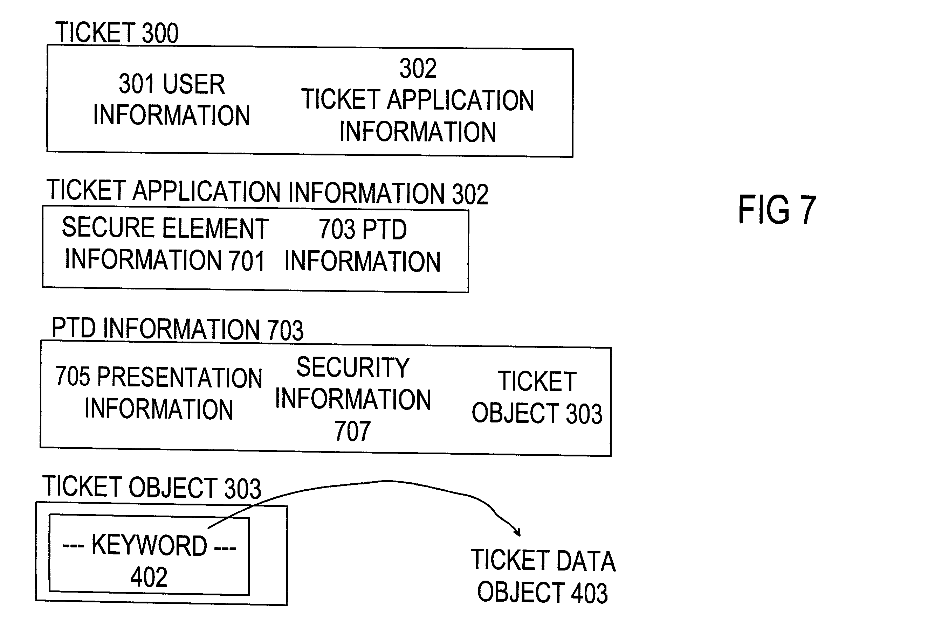

Figure 7 illustrates more closely the structure of a ticket 300. The ticket can be identified by the ticket issuing system 101, ticket printer 105, or by the inspection system 106 from the user information 301 part of the ticket. For some applications, such as for airline tickets, it is necessary that the legitimate user can be identified from this part, whereas for some other applications it is beneficiary to provide user anonymity, such as for coupons or vouchers e.g. for public transportation. Therefore the user information 301 may contain a clear-text identifier relating to the user, the user name encrypted, or other identifier.

The user information 301 appears in all ticket types, e.g. event tickets, airline tickets, receipts, medical prescriptions, medical records, vouchers etc. It may include information to the user on the services, and the terms and conditions of the digital ticket 300. The elements and attributes of the user information are defined by means of different ticket data types in independent XML schemas. All the ticket data types defined in the new schemas derive from a basic ticket data type, including at least user information 301. This permits the ticket application throughout the definition of modular ticket 350 to validate new ticket data types.

The user name does not need to be encrypted. If the user wants to protect this information he or she can use the services of the ticket application 200 to access the ticket data storage 230 through a password or PIN code entry. The issuer might want though, to protect the ticket data object 403 through encryption. To identify the user, the ticket data objct 403 may carry the personal information of the user.

Ticket application information 302 is optional in the basic ticketing schema. This part appears in those ticket types that require the use of a ticket data object and thus need to specify the presentation method and security. Ticket application information 302 includes Secure Element SE information 701 and PTD information 703. Ticket application information 302 thus contains information necessary to the ticket application 200 to manipulate a ticket data object 403.

SE information 701 and security information 707 include information on the requirements for secure handling of the ticket data object 403 by the security means 250 present in the mobile device 102. The services provided by the security means 250, such as by the SE 252, to the ticket application regarding to the handling of a given ticket data object 403 are initially related to copy protection mechanisms by means of Public Key Infrastructure PKI, tamper proof storage, PKI encryption, and authentication by means of digital signature services.

Presentation information 705 indicates the ticket application 200 the only feasible presenting means 260B for presenting the ticket data object 403 to the inspector 106 or to the ticket printer 105. This information may be used in the generation means 206 of the ticket application 200.

Security information 707 indicates to the ticket application 200 located in the mobile device 102 the security model that needs to be applied to the ticket data objects 403 at the ticket application 200 level. This secure handling initially includes two topics, namely i) application services access control, and ii) ticket data object 403 access control.

The application services access control refers to the operations that are allowed to a given ticket data object 403. This security service is provided by the own implementation of the ticket application 200. The services of the ticket application 200 that are provided to the ticket data object 403 are in accordance with the declaration in this part of the ticket 300. For example, the application services access control may indicate that the ticket data object 403 must not be transferred or backed up. Since the ticket application may or may not use tamper proof mechanisms, such as code obfuscation, this level of security is only valid to prevent attacks by a general user or an occasional hacker.

Therefore, ticket data access control refers to the access by the user to a given ticket data object 403. The later might be requested by the ticket issuing system 101 to be protected by a Personal Identification Number, or by encryption, e.g. symmetric encryption. These security services are provided by the local mobile device resources in contrast to the use of the SE.

According to one aspect of the present invention, the ticket data object 403 may also be included in the ticket application information part 302. The link 404 including the keyword 402 and pointing to the ticket object preferably is located in the ticket object 303.

Secure element information 701 indicates security requirements to be supplied by the SE 252, or other means included in the security means 250. Transport information 705 indicates the presentation method to be used for presenting the ticket 300. The identifiers 707 relating to application level security indicate security requirements to be supplied by the application level. The requirements may relate to the geographical location where the ticket is to be used, such as for local traffic tickets, or the device identity or user identity, needed for obtaining a reliable but flexible copy protection mechanism.

The ticket data object 403 may have encrypted proprietary format, or any other format as well. Its format is preferably defined by the ticket issuing system 101, and, the ticket data object 403 may be traded by some given services. This object is a reference to by a link 404 indicated by a keyword 402 in the ticket 300, preferably in the XML document part included in the ticket object 303, or the PTD information 703.

The ticket data object 403, as already discussed, may include sound data, i.e. the ticket data object 403 is a sound file, video data (video file). Similarly, the ticket data object 403 may be an XML document having a proprietary syntax, or, it may be a two dimensional bar code or any other optically readable or recognisable object. The presentation of the ticket data object 403 might be in a frequency detectable by human hearing, or in a range of high or low frequencies detectable by a specific device. The sequence of aural information (pitch and timing) would represent the aural ticket, much in the same way an arrangement of pixels will represent a pictorial ticket.

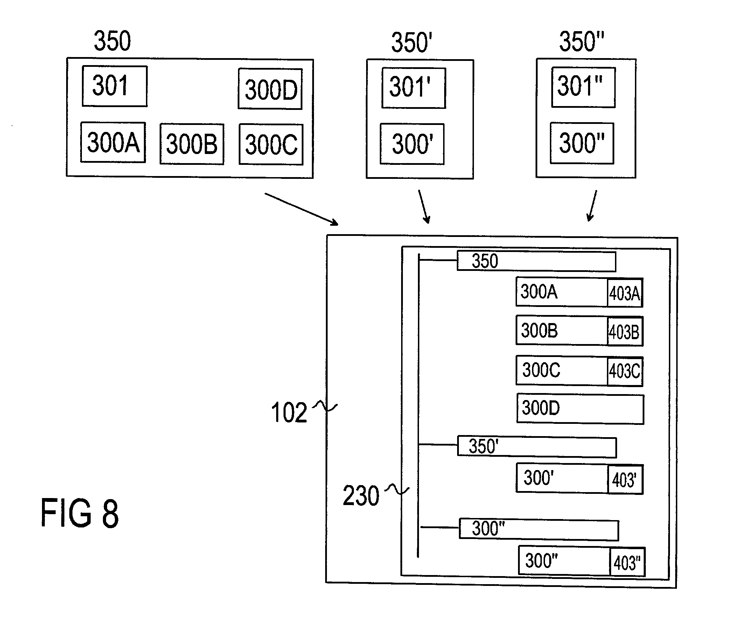

Figure 8 shows one possible structure for a modular ticket 350. The modular ticket 350 contains user information 301, and then a bunch of tickets data 300A, 300B and 300C. Further, there is a receipt 300D for the purchase of the modular ticket 350. The ticket 350' includes user information 301' and ticket object 303'. The ticket 350'' includes user information 301'' and ticket object 303''. The tickets 350' and 350'' do not contain more than one ticket 300', 300".

The ticket data objects 403A, 403B, 403C of the modular ticket 350 are also stored in the data storage 230 of the mobile device 102. However, if they correspond to like tickets, the ticket data objects 403A, 403B, 403C do not then need to be stored in triplicate, but it suffices if one general model to be used as the ticket data object 403A, 403B, 403C is stored. Further, the ticket data objects 403A, 403B, 403C do not need to be transported from the ticket issuing system 101 simultaneously, or at the same time as the modular ticket 350 is received at the mobile terminal 102, but the transport may be delayed to a later moment of time, e.g. for security purposes, because apparently this kind of an approach may reduce the risk of the user tampering the ticket data object 403A, 403B, 403C. The later moment of time may be a moment closer the defined moment when some of the tickets 300A, 300B, 300C is going to be used, such as might be the case when the modular ticket 350 were a bunch of flight tickets.

The tickets 300, 300' and 300'' are stored into the ticket storage 230. Preferably, it is a database for tickets in the end user's mobile device. The ticket 300 has similar structure in the database. The individual tickets have respective objects, 403, 403' and 403'', where the object 403' relates to ticket 300' and the object 403'' to ticket 300''. Further, each modular ticket 350 for a bunch of tickets 300A, 300B and 300C may contain a receipt 300D of purchase. The receipt 303D may be stored or moved into a separate receipt database which again can be located in the mobile device or in a network data repository.

In other words, a modular ticket 350 includes user information 301 and several individual tickets 300A, 300B, 300C. Each individual ticket 300A, 300B, 300C then includes user information 301A, 301B, 301C and ticket application information 302A, 302B, 302C, if the ticket issuer is willing to use any ticket data object 403A, 403B, 403C. This means that the user information contained in the individual tickets 300A, 300B, 300C may be different to each other, and further that the user information 301 included in a modular ticket 350 may be different from the user information 301A, 301B, 301C in the individual tickets 300A, 300B, 300C contained in the modular ticket 350.

In the prior art solutions there has not been any convenient possibility for delivering information on the general terms and conditions of usage of the ticket to the user. In accordance with the present invention, the modular ticket 350 includes a user information part 301 on the general terms and conditions of the ticket. The service is confirmed by the digital signature in the ticket 300.

In the previous solutions, the validity of the ticket could only be determined by the ticket issuer, e.g. by verifying the signature, and not by the party offering the service package. According to the present invention, the modular ticket approach offers a non-repudiation service through the digital signature of the entity issuer of the modular ticket 350.

Different tickets 300A, 300B, 300C, 300' and 300'' which require extremely similar operations to those done for the classical digital tickets, i.e. obtaining and browsing tickets, accessing services, transferring and backing up tickets, may be realised with a plurality of dedicated ticket applications 200. This approach is not optimal from the point of view of code reuse. Secondly, it wastes the capacity of the mobile device 102. In addition, such an approach does not benefit from the operational knowledge that a user might already have from the ticket application 200. He or she expects to be able to have a similar user interface for most uses of tickets, which can simply be provided, according to the present invention, by the same U/I part 201 for more ticket applications 200, or by using the same ticket application 200 for different kinds of electronic tickets.

Figure 9A illustrates closer a first possibility for the presentation mechanism. The ticket 300A is presented by the user of a mobile device 102 to a ticket inspector 106.

The user selects with the help of the U/I part 201 of the ticket application 200 a ticket 300A from a modular ticket 350 including the bunch of tickets 300A, 300B, 300C. The ticket application 200 reads the ticket object 303A of the ticket 300A, detects from the XML frame in the ticket data a keyword 402 indicating a link 404 pointing to the ticket data object 403 of the ticket 300A. Then the ticket application 200 reads the ticket data object 403 which may be stored in the data storage 230. The generation means 206 generate a presenting command for presenting means 260B, the presenting command being specified in the presentation information 705 contained in the PTD information 703 further contained in the ticket application information 302.

The ticket data object 403 is transported over the transport layer i.e. using the presenting means 260B to the receiving means 601 of the inspection system 106.

Figure 9B depicts a second possibility for the presentation mechanism. The user selects with the help of the U/I part 201 of the ticket application 200 a ticket 300A from a modular ticket 350 including a bunch of tickets 300A, 300B, 300C. The ticket application 200 reads the ticket object 303A, detects from the XML frame in the ticket data a keyword 402 indicating a link 404 pointing to the ticket data object 403 of the ticket 300A. Then the ticket application 200 reads the ticket data object 403 which may be stored in the data storage 230. The ticket data object 403 read is then presented on the presenting means 260B, such as on the display 261 of the mobile device 102. The sensor 601' of the receiving system 601, such as a scanner or image recognisation system, of the inspection system 106 detects the object 403 on the display 261. The sensor 601' may also be a transducer, digital camera, video camera, and so forth.

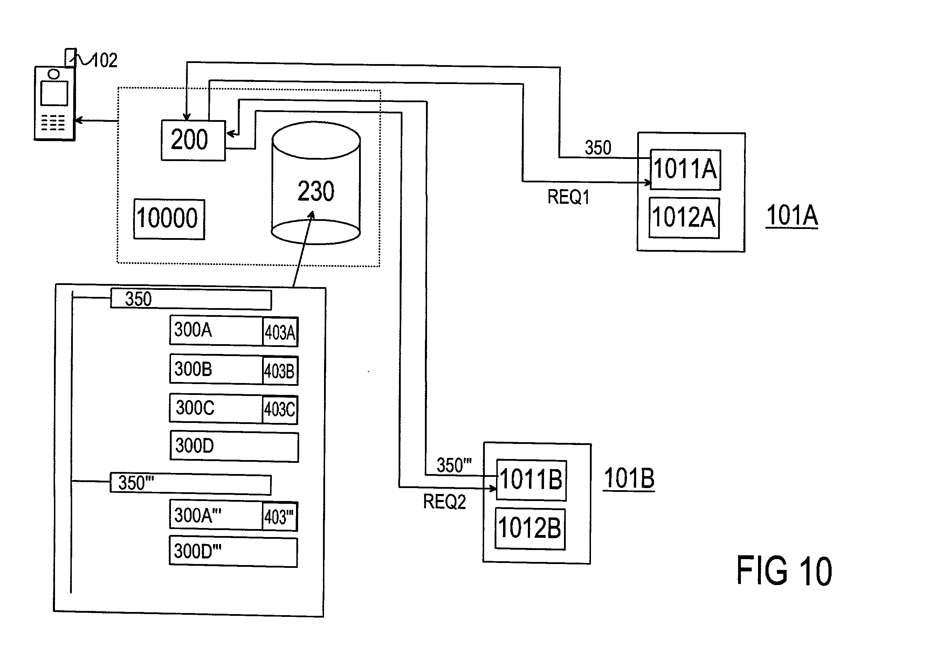

Figure 10 illustrates closer the operation of the ticket application 200 and the ticket storage 230. The user requests a modular ticket 350 by sending a request REQ1 to the front end 1011A of a ticket issuing system 101A. The front end 1011A forwards the request REQ1 to the back end 1012A of the ticket. There the data contained in the request REQ1 is checked. Such data may include a customer number, billing information, credit card number, and information identifying the modular ticket 350, such as the bus line number, event name, or other identifier.

The ticket issuing system 101A thus processes the request REQ1 and after it has been validated, returns by returning the modular ticket 350 to the mobile device 102. The mobile device 102 routes the modular ticket 350 to the ticket application 200. This may be implemented by using SIM Application Toolkit if the mobile device is a GSM terminal. The application 200 reads all short messages coming to the mobile device 102 and containing a specific identifier. The ticket application stores the modular ticket 350 to the ticket storage 230. The ticket storage 230 may include ticket type database 10000. The ticket type database contains necessary information for the ticket application 200 about presentation mechanisms, payment, receipts, and it may even contain some settings for the U/I part 201 of the ticket application 200. The modular ticket 350 is then stored into the ticket storage 230.

The ingredients of the modular ticket 350, i.e. travel package, airline tickets, are delivered by the issuers individually. Their format may be specified in each ticket issuing system separately. Further, the ticket issuing system 101 may supply some data for the ticket application 200, i.e. such as the rules contained in the ticket type database 10000. In contrary to the prior art solution, this approach requires considerably less separate transferring of data. In addition, since there now is a logical container for the individual related tickets, identifying of the tickets may be automated and it is not left up to the user to identify them in the ticket data storage 230.

By using XML schemas it is possible to define the contents for the ticket type database 10000. In other words, a container of variable data types as defined by the user information part 301 of each ticket. The ticket type database 10000 will serve for storing the individual tickets 300 of various types. The tickets 300 consist of an XML document comprising user information 301 and ticket application information 302, including also ticket object 303 with the link 404 to the object 403, and the embedded ticket data object 403.

By defining the elements and attributes of a basic ticket type in an XML schema, the minimum set of elements and attributes that any ticket 300 might have is spezified. A basic ticket consists of similar XML documents with the classical ticket function. It only contains user information 301.

Subsequently, by using the XML schema capabilities for inheritance from a original data type, third party forums and entities can extend the basic ticket type through the definition of new XML schemas to suit their needs regarding information to the user more according with the type of service provided. These schemas will need to be stored in the mobile device in the ticket storage 230. The schemas, XML documents, can be signed by a trusted party and verified by the ticket application prior their installation in the database.

The XML document forming the ticket 300 includes two parts user information 301, ticket application Information 302, and then it has an embedded ticket data objet 403. The object 403 which is linked to the ticket 300 via a link 404 defined by a keyword 402 and situated in an XML frame 401 in ticket object 303. The ticket data object 403 is the only thing to be presented to the inspector by the user in order to get access to the service promised. The ticket data object 403 link 404 was identified in the XML document by a keyword 402 that would indicate the presence of this object to the application parser located in the parsing means 202 of the ticket application 200.

The role of user information 301 is to inform the user and in some cases to provide non-repudiation services, e.g. through out the signature of the XML document. Also, the verification of the signature does not need to be performed by the security means 250, e.g. by the secure element 252 of the user's mobile device 102. This will be only necessary in the case of a conflict with the entity providing the ticket service. In this case the user takes the ticket 300 which is a signed XML document to a referee arbitering the dispute with the service provider in order to claim his/her rights. This referee will then verify the digital signature of the issuer in the XML document and act in consequence.

These schemas are used to validate the conformity of a given ticket 300 to a stored model, such as a model that needs to be compliant to some official regulations. The user information 301 is the minimum information necessary for handling electronic tickets in a computer server. In the most elementary realisations, the tickets are based on text, for example they include a ticket unique identifier number TUID. In these cases no ticket data object 403 is needed.

The definition of new ticket types i.e. the user information 301 part of ticket 300 does not preclude of utilising the ticket application information 302 to hold a link 404 to a proprietary ticket data object 403. Similarly, it is possible to select in the ticket issuing system, which parts of the ticket 300 may be manipulated. For example, the embedded data object can be a medical prescription, and the user information part 301 only contains user information of the user obtaining the prescription.

The user may request a prescription by sending a request REQ2 to the front end of a medical doctor site 101B. The request REQ2 is processed similarly, and in response a ticket 300''' is returned. The ticket 300''' is a prescription and contains a similar structure than those ticket models discussed above. The processing performed for the ticket 300''' in the mobile device 102 has already been discussed above. As immediately noted, the issuer of the prescription does not need to call a pharmacy any more and the user does not need to call the doctor any more because this kind of process can be automatised.

The cue ticket information elements, such as user information 301, ticket application information 302, and ticket object 303 are fully accessible by the user by means of the ticket application 200. Examples of such means are extensible Structure Language XSL and an XML parser. The methods and means to be select depend, however, on the format of the ticket 300 and the ticket data object 403. Similarly, the format of the ticket 300 and the ticket data object 403 may either enable or disable user access to this data.

The accessibility to the ticket object requires the recognition of the format by the XSL document contained in the frame 401. This can be done by the application parser contained in the parsing means 202. The user does not need any access to the information inside the ticket data object 403 in order to use the ticket 300, for example, for obtaining a service promised by the merchant. The ticket application 200 needs to be able to extract the ticket data object 403 and present it to the inspection system 106 or to ticket printer 105.

The separation of ticket data object 403 and cue ticket-info elements, i.e. the user information 301, ticket application information 302, and ticket object 303 provides many advantages.

By separating the ticket info from the ticket object it is possible to copy protect and sign only the ticket object and not the full document thus saving processing capacity not only in the mobile device 102, but also in the ticket issuing system 101, the ticket printer 105, and inspection system 106. This is very important in ticket applications where a high throughput is desired, such as in the ticketing applications used by public transportation. Moreover, this approach, with total separation of user information and ticket data object, permits the back-up (copy) of the user information part, even when the ticket data object can not be copied or tranfered.

It is only necessary to protect the ticket object and not the full document against fraudulent usage. The merchant can sign the cue ticket-info elements for providing off-line non-repudiation capabilities.

The mechanisms employed for this purpose will be validated by the merchant during the redemption of the ticket object, i.e. in the ticket issuing system 101. The merchant can optionally sign the cue ticket-info elements to provide non-repudiation services of the ticket. In the case of a conflict the signed cue ticket-info elements can be taken to a referee to resolve the dispute. In this case the signed cue ticket-info elements act as a digital receipt for the user.

As a result of using the invention, the user gets consistent user experiences regardless of the type by means of cue ticket-info elements in the XML document.

By separating the ticket info elements or additional objects in the XML document from the real ticket it is possible to deliver promotion objects (e.g. ringing tones, icons, coupons, etc.) together with the ticket. Further, in the ticket issuing system 101, ticket data object 403 may be further tailored to suit individual business demands.

By separating the ticket object 303 from the ticket object 403 it is possible to convert the cue ticket-info to a more adequate format depending on the mobile phones capabilities and preferences of the user without lost of integrity of the ticket info or affecting the value of the ticket.

Further, backward compatibility to legacy digital tickets is obtained, and by using the inventional concept, also bandwidth usage is reduced. This is very important in the case of remote redemption, since only the ticket data object 403, not the full document, need to be presented to the inspection system 106 or ticket printer 105.
An electronic ticket can be made to include user information, ticket application information, and ticket data further including an object. Further, the ticket data may further include a keyword linking the object to the ticket. This object may be embedded into a frame, which may be for example an XML frame.

When issuing electronic tickets user information, ticket application information, and ticket data are included into the ticket. A link including a predefined keyword is included into the ticket data, the link defining a ticket data object. Then the electronic ticket is sent to the mobile device, or to the personal computer of the user having ordered the ticket.

The electronic ticket is first received at the mobile device from a ticket issuing system and stored thereto. When the ticket is to be presented, the parsing means of a ticket application parse the ticket in order to detect a predefined keyword in the ticket data. If in the parsing the predefined keyword is detected, in response to the detecting of the keyword a presentation command for presenting means is generated in order to present the ticket data object defined by the link including the keyword.

A ticket is used by presenting the ticket data object identified by a link including a predefined keyword. The ticket inspection system or the ticket printer checks the presentation of the ticket data object.

Different variations of the invention allow the handling of access related XML documents of variable user information content in a modular ticket forming a single logical unit. Examples of such modular tickets are tickets of given types, such as airline tickets, and the receipt of purchase of the tickets. Further examples of such modular tickets are tickets for different events, and a plurality of tickets for one event in which case there is a plurality of ticket unique identifiers numbers for the bunch of tickets.

The tickets may also correspond to medical prescriptions with the initial diagnosis, the tickets then being digitally signed by a medical doctor in the user information part of the ticket. The prescriptions may be realised also by means of a modular ticket.

The benefits of the invention are various. Not only code optimisation, but also consistent user experience is obtained. The user only needs to know how to use the ticket application in order to manage a plurality of ticket objects.

Preferably, the objects have similar content types based on XML.

The security can be provided by the issuer of the ticket. For a modular ticket the issuer entity of the modular ticket can provide through its digital signature to the XML document. The structure of the modular ticket is beneficial in the case that the entity issuing the ticket and the entity offering the service are not the same, which may happen e.g. in the case that a concert ticket is bought at a shopping mall.

Last but not least, the presented models also provide support for proprietary content for the tickets. In particular, this is the case when the tickets include XML documents that are handled by the ticket application. The XML based user information may then be embedded with a proprietary data object with a description to the ticket application about its usage. Such tickets may be used not only for tickets, but also for receipts, medical records, medical prescriptions, hotel vouchers, and for other similar purposes.

Although the invention was described above with references to the examples shown in the appended drawings, it is obvious that the invention is not limited to these but it may be modified by those skilled in the art without differing from the scope and the spirit of the invention. The invention has been described by using XML terminology in the examples, however any other suitable language can be used for carrying out the invention.

To summarise, different approaches have been suggested to standardise the handling of digital tickets for mobile platforms as well as the internet. However, the generation of complete new standards (i.e. data format, syntax, and semantics) on digital tickets are likely to exclude existing ticketing schemes based on SMS, barcodes, pictures, etc.

Taking into account that the successful and prompt deployment of a digital ticket framework depends on great measure on accommodating these proprietary strategies, it is necessary to provide mechanisms that while providing a consistent user experience are also capable of accommodating the merchant's legacy tickets.

In addition, in order to make the ticketing framework scalable (and therefore, reach most mobile phone market segments) it would be highly desirable to support from the very simple tickets (e.g. based on SMS) which are likely to be host in phones with low capabilities to more sophisticated tickets (e.g. based MMS) for phones with multimedia capabilities.

There has been created an XML based language for digital ticket usage. This is the "generalized digital ticket definition language". http://www.w3.org/Dsig/signed-XML99/pp/NTT_xml_ticket.html / "General-purpose Digital Ticket Framework"; Ko Fujimura and Yoshiaki Nakajima; published in the Proceedings of the 3^{rd} USENIX Workshop on Electronic Commerce Boston, Massachusetts, August 31 - September 3, 1998.

This language is meant to define individual elements of the tickets (e.g. TicketIssuer, TicketID, Ticket typeID) that are used by the mobile phone ticket application and the merchant's system alike. Thus, in one of the advantageous embodiments of the invention, the ticket object is actually the full XML document. Consequently, the XML document will need to be totally uploaded to the merchant for processing and authentication in order to obtain the service promised by the ticket.

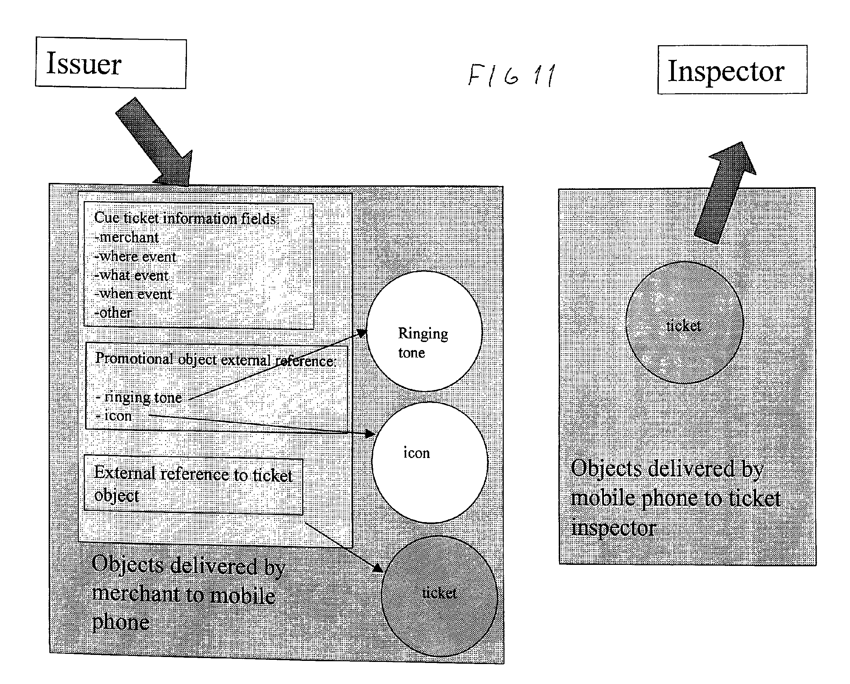

In such a proposed solution the ticket will not be the XML document itself but it will be wrapped by an XML document (see Fig. 11). This means that the XML doc will contain a reference to an external entity - the real ticket object - which will be totally proprietary to the merchant (e.g. sms/text, barcode, picture, proprietary encoding, etc.). Nonetheless, the XML ticket-information elements will be used to provide a consistent experience to the user with regards to the type of ticket, date of usage, etc. These CUE (Consistent User Experience) information elements (cue ticket-info elements) would need to be defined by a standardization body such as the MeT, while the elements/format required by the ticket inspector's processing systems are left completely proprietary to the merchants in order to support backward compatibility and to suit particular business needs.

In other words, the ticket-document will favourably have two interfaces: (1) to the user throughout the ticket-info elements (2) to the merchant throughout the external ticket entity which contains the real ticket value (used by the ticket inspector to validate the ticket and grant access to services).

While the cue ticket-info elements are fully accessible by the user by means of the ticket application (through XSL and XML parser), it will depend, however, on the format of the ticket object whether user access is possible. The accessibility to the ticket object would require the _{"}recognition" of the format by the XSL document and application parser. However, the user does not need access to the information inside the ticket object in order to obtain the service promised by the merchant. The ticket application just needs to be able to extract the ticket object and upload it to the ticket inspector.

Finally, the separation of ticket object and cue ticket-info elements, provides among others the following advantages:
it is only necessary to protect the ticket object and not the full document against fraudulent usage. The mechanism(s) employed for this purpose will be validated by the merchant during the redemption of the ticket object.

The merchant can optionally sign the cue ticket-info elements to provide non-repudiation services of the ticket. In case of conflict the signed cue ticket-info elements can be taken to a referee to resolve the dispute. In this case the signed cue ticket-info elements act as a digital receipt for the user.

The following advantages are gained by the technical features of the above described embodiment of the invention:
- Consistent user experience regardless of the type by means of cue ticket-info elements in the XML document
- By separating the ticket info elements) or additional objects in the XML document from the real ticket it is possible to deliver promotion objects (e.g. ringing tones, icons, coupons, etc.) together with the ticket.
- By separating the ticket info from the ticket object is possible to convert the cue ticket-info to a more adequate format (depending on the mobile phones capabilities and preferences of the user) without lost of integrity of the ticket info or affecting the value of the ticket.
- By separating the ticket info from the ticket object it is possible to copy protect/sign only the ticket object and not the full document.
- By separating the ticket info from the ticket object, a merchant could sign the cue ticket-info elements for providing off-line non-repudiation capabilities.
- Backward compatibility to legacy digital tickets.
- Proprietary description of ticket objects to suit the individual business demands.
- Reduce bandwidth usage (important in case of remote redemption) since it is only the ticket object that needs to be uploaded to the tickets inspector and not the full document.

## Claims

1. A device (102) for presenting an electronic ticket (300),
**characterised in that**
the device (102) includes
- receiving means (263) for receiving an electronic ticket (300) from a ticket issuing system (101), the electronic ticket (300) including user information (301), ticket application information (302), and ticket object (303),
- a ticket storage (230) for storing at least one electronic ticket (300),
- parsing means (202) for detecting a predefined keyword (402) in the ticket object (303) thus generating a parsing result,
- generation means (206) responsive to the parsing means (202) for generating a presentation command for presenting means (260B) adapted to present a ticket data object (403) defined by a link including the keyword (402), if the parsing result is that the predefined keyword (402) is detected.

2. A device according to claim 1,
**wherein** the presenting means (260) include a display (261) for displaying the object (403).

3. A device according to claim 1,
**wherein** the presenting means (260) include a radio frequency tag (265) for beaconing the object (403).

4. A device according to claim 1,
**wherein** the presenting means (260) include a loudspeaker (264) for presenting the object (403) aurally.

5. A device according to claim 1,
**wherein** the presenting means (260) include a sending means (262) for sending the object (403) to a predefined address (ADDR) via a communications channel, such as over the air interface.

6. A device according to claim 1,
**characterised in that**
the device further includes security means (250) for encrypting and/or decrypting, authenticate and/or sign (PKI means) the ticket data.

7. A device according to claim 1 or 6,
**characterised in that**
the ticket storage (230) is adapted to store a receipt relating the ticket (300).

8. A device according to claim 1, 6, or 7,
**characterised in that**
it has means for using or storing a modular ticket (350) containing a plurality of tickets (300A, 300B, 300C).

9. A device according to claim 8,
**characterised in that**
the modular ticket (350) further includes a plurality of ticket application identifiers (302A, 302B, 302C) each relating to specific ticket object (303A, 303B, 303C) or to one ticket application (200).

10. A device according to claim 5,
**wherein** the predefined address (ADDR) is included in the ticket application information (302) or ticket object (303).

11. A device according to any one of the preceding claims,
**wherein** the parsing means (202) are responsive to a request (REQ) received from an inspection system (106).

12. A device according to claim 5 or 10,
**wherein** the predefined address (ADDR) is obtained from a ticket inspection system (105, 106).

13. A device according to any one of the preceding claims,
**wherein** the electronic ticket is an XML document.

14. A device according to any one of the preceding claims,
**wherein** said device (102) is a mobile terminal.

15. A system (101) for issuing electronic tickets (300),
**characterised in that** the system includes
- generating means (501) for generating an electronic ticket (300) including user information (301), ticket application information (302), and ticket object (303), wherein the generating means (501) generate a link including a predefined keyword (402) into the ticket object (303), the link defining a ticket data object (403),
- sending means (502) adapted to send the electronic ticket (300) and the ticket data object (403) to a device (102, 103, 104, 105), especially to a device (102) according to any one of the claims 1 to 14.

16. A system according to claim 15,
**wherein** the ticket data object (403) is embedded to the electronic ticket (300) or into the ticket object (303).

17. A system according to claim 15 or 16,
**characterised in that**
the generating means (501) further store a predefined address (ADDR) to the ticket application information (302) or to ticket object (303) of the electronic ticket (300).

18. A system according to claim 15, 16, or 17,
**characterised in that**
the generating means (501) are further adapted to store a predefined address (ADDR) to the ticket application information (302) or to ticket object (303).

19. A system according to claim 15, 16, 17, or 18,
**characterised in that**
the generating means (501) further store a plurality of ticket object (303A, 303B, 303C) for one user information (301) and/or some ticket application information (302, 302A, 302B, 302C), thus forming a modular electronic ticket (350).

20. A system according to claim 15, 16, 17, 18 or 19,
**wherein** the ticket object (303) includes an XML frame (401).

21. A system according to claim 15, 16, 17, 18 or 19,
**wherein** the object (403) is embedded into the XML frame 401.

22. A system **including**
- a system (101) for issuing electronic tickets, adapted to send electronic tickets (300) to a device (102), an electronic ticket (300) including user information (301), ticket application information (302), and ticket object (303), the system (101) particularly according to any one of the claims 15-21,
- a device (102) for presenting an electronic ticket comprising i) a ticket storage (230) for storing at least one electronic ticket (300), ii) parsing means (202) for detecting a predefined keyword (402) in the ticket object (303), and iii) generation means (206) responsive to the parsing means (202) for generating a presentation command for presenting means (260B) if the parsing result is that the predefined keyword (402) is detected, the device (102) particularly according to any one of the claims 1-14, and
- a device (105, 106) for inspecting electronic tickets (300), the device (105, 106) having predefined address (ADDR) and including i) receiving means (601) for receiving a ticket data object (403) from a device (102), the ticket data object (403) being defined in the device (102) by a link including a keyword (402), ii) checking means (603) for checking the contents of the object (403) received, the means producing a checking result, and iii) entry means (605) responsive to the checking means, adapted to allow entry, if the checking result shows that the ticket data object (403) corresponds to a valid ticket (300), and/or forbid entry in the opposite case.

23. A system according to claim 22,
**characterised in that**
the ticket (300) includes an XML frame (401) and a ticket data object (403).

24. An electronic ticket (300),
**characterised in that**
the ticket includes
- user information (301),
- ticket application information (302), and
- a ticket object (303) further including a ticket data object (403), the electronic ticket (300) particularly for use in a device and/or system according to any one of the claims 1 to 23.

25. An electronic ticket (300) according to claim 24,
**wherein** the ticket object (303) further includes a keyword linking the ticket data object (403) to the electronic ticket (300).

26. An electronic ticket (300) according to claim 24 or 25,
**wherein** the ticket data object (403) is embedded into a frame (401).

27. An electronic ticket (300) according to claim 26,
**wherein** said frame (401) is an XML frame.

28. An electronic ticket (300) according to any one of claims 24-27,
**characterised in that**
the ticket (300) further includes a promotional object or an external reference thereto.

29. A ticket according to claim 28,
**characterised in that**
said promotional object is a ringing tone or an icon.

30. A modular electronic ticket (350)
**characterised in that**
the modular electronic ticket (350) includes an XLM document divided into several XML parts, the parts further including
- user information (301), and
- individual tickets (300A, 300B, 300C) according to any one of the claims 24-29, the individual tickets (300A, 300B, 300C) including
- user information (301A, 301B, 301C), and
- ticket application information (302A, 302B, 302C), the ticket application information (302A, 302B, 302C) including a part for a ticket object (303A, 303B, 303C) with a link (404A, 404B, 404C) including a keyword (402A, 402B, 402C) to a ticket data object (403A, 403B, 403C), the ticket data object (403A, 403B, 403C) being presented by a device (102) when the ticket (300A, 300B, 300C) is to be used.

31. Means for performing an operation on an electronic ticket (300A, 300B, 300C) according to any one of the claims 24-30, the electronic ticket including at least one XML based documents whose model includes user information that derives through XLM schemas from a basic user information (301) type, several of these tickets (300A, 300B, 300C) being delivered together using the stucture provided by the modular ticket (350).
